# EUROPEAN PATENT SPECIFICATION

(11) **EP 1 096 699 B1**
(45) Date of publication and mention of the grant of the patent: **01.10.2008**
(21) Application number: 00660150.4
(22) Date of filing: 04.09.2000
(51) Int. Cl.: H04B 7/185

(54) **Switching a call to a terminal in an aircraft through a satellite link**
Schaltung eines Rufes für ein Endgerät in einem Flugzeug durch eine Satellitenverbindung
Commutation d'un appel vers un terminal dans un avion à travers une liaison satellite

(30) Priority: 28.10.1999 FI 992331
(43) Date of publication of application: 02.05.2001
(73) Proprietor: Nokia Corporation, 02150 Espoo (FI)
(72) Inventor: Sinivaara, Hasse, 2760 Espoo (FI); Honkala, Hannu, 33300 Tampere (FI); Kallio, Janne, 33470 Ylöjärvi (FI); Lemiläinen, Jussi, 33720 Tampere (FI); Rautiola, Markku, 33820 Tampere (FI); Närvänen, Kai, 33960 Pirkkala (FI)
(74) Representative: Johansson, Folke Anders

(56) References cited:
- EP-A- 0 828 354
- WO-A-98/11678
- WO-A-99/31821
- WO-A-99/48311

## Description

The present invention relates to a data transmission system, a network element and a method for switching a call to a terminal in an aircraft over a satellite link.

As mobile communication networks have diversified to offer in addition to the transfer of speech a wide range of other increasingly diversified services, as uninterrupted access as possible to one's own user interface and own service range is extremely important. Due to standardisation and co-operation between telecommunications operators, it is possible for subscribers of a mobile communication network to be reached with the help of a single number already in a very extensive geographical area. However, there are still many places where the use of services of a mobile communication network is difficult or even impossible. Some of these are aircraft and other means of transport, wherein the use of a mobile station is forbidden for safety reasons or impossible because of the speed of the transport means. Therefore, there has indeed been a great need to solve the problem for managing calls between an airplane and a terrestrial telephone network (fixed networks, mobile communication networks). In order to solve the problem, the publication WO 96/02093 presents a network of base stations on the ground from where a radio connection based on CDMA technology would be established to an airplane. Because of the high speed of airplanes, big frequency changes occur due to the Doppler effect, whereupon the receiving of signals is impaired both towards terrestrial base stations and towards the antenna of an airplane. Therefore, a telephone connection to an airplane is currently managed mainly through a satellite link. The publication WO 98/21838 presents the utilisation of a satellite link between an airplane and a terrestrial network.

In the airplanes of some airline companies, there is installed one or more public telephones, which provides passengers with an opportunity if they so desire to make a call to the ground through a satellite link. Normally, the telephones are part of an In-Flight Entertainment (IFE) system and, typically, comprise a card reader with the help of which invoicing can be automatically directed at a user's credit card account. When the user has connected, in connection with a first call, his data to a given telephone the connection can also be used with special arrangements towards the passenger. However, the service is based on connecting the personal data and the payer data and, thus, it is typically not connected with the passenger's subscriber data on the ground. This being the case, for example, the use of intelligent services, such as transfers of conditional calls provided by telecommunication networks does not function when the subscriber is in an airplane. Because the both-way nature of traffic is based on the passenger's activity and the passenger may hesitate to establish a connection due to the expensiveness of a satellite link, said arrangement as such does not significantly improve access to services of a mobile communication network during flights.

The patent publication WO 98/26521 describes a system according to Figure 1 for implementing a both-way data transmission carried out through a radio interface, during a flight to a subscriber in an aircraft. Said system comprises a Ground In-flight System Controller GISC, which maintains and provides routing data related to system subscribers. The GISC contains a Visitor Location Register VLR and it is connected to a Home Location Register HLR, a Gateway Mobile Switching Centre G-MSC, a Public Switched Telephone Network PSTN. The GISC is further connected through a satellite link to an Aircraft In-flight System Controller AISC. The subscriber has a smart card whereto a PSTN Calling Card Number CCN is connected or he gives his CCN by keying it directly in the telephone, whereupon the AISC connects the CCN to the data of the telephone in the airplane. The AISC informs the controller GISC of the registration of the CCN, which also updates the information for the home location register HLR. A call made to the CCN is routed on the basis of the number to the gate mobile switching centre G-MSC, which on the basis of the subscriber data provided by the HLR routes the call through the controller GISC on the system controller AISC. On the basis of the CCN maintained by it and the contact information of the telephone in the airplane, the AISC detects and connects the call to a subscriber according to the CNN. The presented solution enables the monitoring of a subscriber of a mobile communication network to an aircraft with call transfer-like arrangements. The identification of a subscriber is based on the CCN provided by the subscriber or read from a smart card. Thus, only an extremely limited number of services of a mobile communication network could be made available with said arrangements, because without a solid identification operators will probably not agree to assume responsibility for the invoicing of services, and invoicing would still have to be managed in another way.

Another problem in satellite connections according to prior art for carrying out satellite calls, is the link's capacity. A satellite channel is circuit-switched and, at the moment, one call over a satellite link keeps one satellite channel reserved. This presupposes that a continuous reservation of a satellite channel is maintained over a satellite between the controller GISC and the network element AISC in the aircraft, which makes the providing of services extremely expensive and the capacity small and, this being the case, a single satellite channel is only capable of serving one call.

Document EP 828 354 A2 discloses a satellite communications network comprising mobile terminal apparatus that is in communication with a satellite via a full duplex channel comprising a downlink channel and an uplink channel.

Now, a method and a system have been invented for transferring data, such as speech, over a satellite link to an aircraft, such as an airplane.

The invention is based on the idea that in connection with a satellite link, both on the ground and in an aircraft, at least one unit is arranged, which enables a connection between a subscriber in the aircraft and a terrestrial network over an unconditional satellite link, and which multiplexes at least two calls on the same satellite channel. Preferably, the unit on the ground maintains the signalling connection towards the terrestrial network and, in the aircraft, correspondingly to the terminal in the aircraft and only reserves the satellite link when required, and when more than one calls are coming to the unit, it multiplexes the calls that come later to the already reserved satellite channel in so far as there is space on the channel. Preferably, the signalling of all the calls that are managed through the satellite link is managed on a common signalling channel. When signalling is managed separately, it does not reserve resources from the call channel (as in a solution according to prior art). With the help of the invention, it is possible to manage over one and the same satellite channel even 4-8 calls at its best simultaneously.

Preferably, the unconditional use and multiplexing of a satellite link are implemented by network elements, one of which is on the ground and the other in an aircraft, connected to units that control the satellite link. Preferably, packet switched data transmission is utilised in part of the connections. Preferably, packet switched data transmission is used between a ground station on the ground and a terrestrial network, for example, a switching centre of a mobile network. Packet switched data transmission is also suitable for use in an aircraft, whereupon a radio interface can be implemented to a subscriber's own mobile station, preferably according to the Wireless Local Area Network protocol. Preferably, traffic in the satellite link is circuit switched. The invention preferably utilises a network element which, apart from the satellite transceiver itself, manages the traffic and the conversion of signals between the satellite link and the network that is on the other side of the network element. Further, the network element in question manages the opening and closing of the satellite channel and the multiplexing of calls (whereas in prior art, the opening and closing of a satellite channel is managed in connection with the satellite transceiver).

With the help of the invention, an advantageous opportunity can be provided for a passenger of an aircraft for also utilising services of one's own data transmission network during a flight. Preferably, a subscriber can also be reached with the subscriber's own subscriber number during a journey. Roaming is carried out substantially automatically and invoicing can be managed safely with the help of the invoicing system of one's own data transmission network. On the ground, a company's own network structure can be utilised on the ground, whereupon costs from data transmission implemented on the ground decrease. An unconditional connection and the multiplexing of a plurality of calls on the same speech channel with a satellite connection reduces the reservation of satellite resources per call, which has a significant effect on the costs resulting from the arrangement of in-flight connections.

According to a first aspect of the invention, there is implemented a data transmission system for switching a call to a terminal in an aircraft over a satellite link, which system comprises
a terminal to be used in an aircraft;
a terrestrial network,
a satellite link between the aircraft and the terrestrial network,
a first network element on the ground between the terrestrial network and the satellite link;
a second network element in the aircraft between the satellite link and the terminal of the aircraft, and
at least one of said first and second network elements comprises said means for interleaving at least two calls on the same satellite channel, **characterised in that** at least one of said first and second network elements is arranged to open a data transmission connection on a channel of the satellite link as there is information to be transmitted and to close said data transmission connection when there is no information to be transmitted.

Further, according to a preferred embodiment of the invention said terrestrial network comprises a mobile communication network, which comprises a mobile services switching centre functionally connected to said first network element and a terminal of the mobile communication network, and that said terminal of the mobile communication network comprises means for establishing a connection to said second network element for operating as a terminal of an aircraft.

In a preferred embodiment of the invention, said interleaving is carried out by time-division multiplexing the information to be transmitted to a channel of a satellite link.

According to a second aspect of the invention, there is implemented a network element in an aircraft that is in connection with a satellite link for switching a call on a channel of the satellite link, which network element comprises means for receiving information from the satellite link and for transmitting to the satellite link, and said network element comprises means for interleaving at least two calls on the same channel of the satellite link, characterised in that said network element comprises means for connecting the network element in a functional connection to a terminal of an aircraft for receiving signals from and for transmitting to the terminal utilizing a short range wireless connection between the network element and the terminal of the aircraft, and that said network element is arranged to open a data transmission connection on a channel of the satellite link as there is information to be transmitted and to close said data transmission connection when there is no information to be transmitted.

According to a third aspect of the invention, there is implemented a method for switching a call to a terminal in an aircraft over a satellite link, the method comprising
transmitting information relating to a call between a terrestrial network and the satellite link a through a first network element located on the ground,
transmitting information relating to a call between the satellite link and the terminal of the aircraft through a second network element located in the aircraft,
interleaving at least two calls on the same channel of the satellite link, and
carrying out said interleaving by at least one network element of said first and second network elements as said at least one network element has information relating to at least two calls to be transmitted towards the satellite link **characterised in that** the method comprises
opening in at least one of said first and second network elements a data transmission connection on a channel of the satellite link as there is information to be transmitted and to close said data transmission connection when there is no information to be transmitted.

Other preferred embodiments of the invention are presented in the dependent claims.

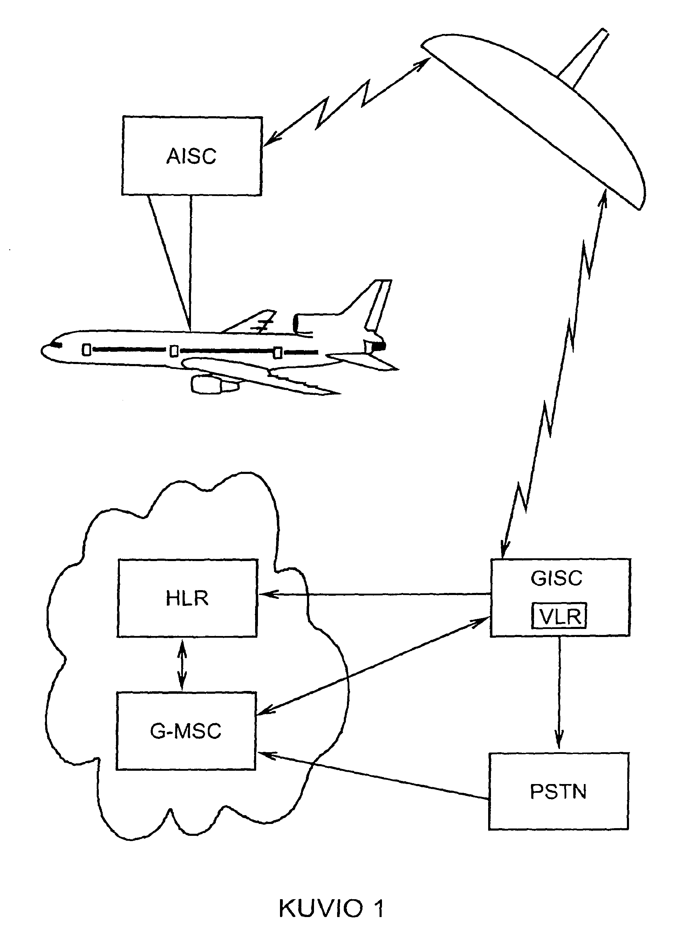

In the following, the invention will be described in detail by referring to the enclosed drawing, in which
- Figure 1: shows an arrangement according to prior art for implementing both-way data transmission to be carried out through a radio interface during a flight to a subscriber in an aircraft;
- Figure 2: illustrates a preferred embodiment of the invention;
- Figures 3a: shows a preferred protocol stack of the arrangement according to Figure 2 for signalling traffic, and;
- Figures 3b: corresponding protocols for voice communication;
- Figure 4: shows a solution for an aircraft, where a set of WLAN terminals are integrated into the seats of the aircraft;
- Figure 5: is a simplified block diagram that illustrates the equipment architecture of an aviation gateway AvGW;
- Figure 6: is a simplified block diagram that illustrates the equipment architecture of a terrestrial gateway TeGW;
- Figure 7: illustrates a second preferred embodiment of the invention;
- Figure 8: shows the coverage areas of Inmarsat satellites;
- Figure 9: illustrates a third preferred embodiment of the invention;
- Figure 10: illustrates the implementation of a message transfer part gateway MTP GW shown in Figure 9, with the help of protocol layers; and
- Figure 11: illustrates the functional structure of an aviation gateway AvGW, wherein the operation of an aviation gatekeeper AvGK is included.

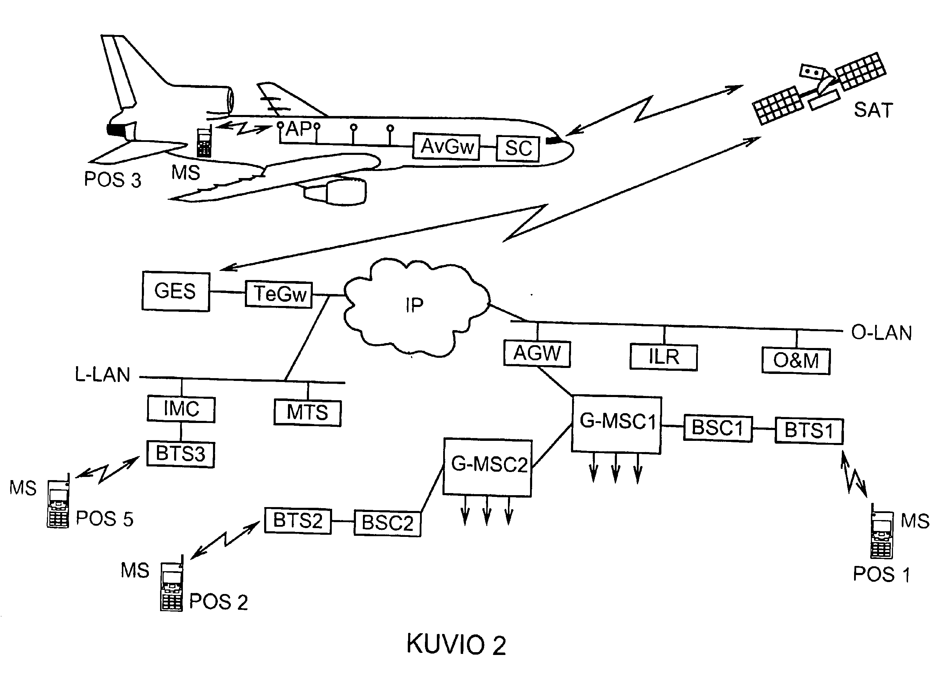

The invention is described by referring to Figures 2-11 and by examining the implementation of subscriber reachability in the GSM mobile communication system when the subscriber is moving from one place to another. It should be noted that the invention can also be applied to other mobile communication systems and, thus, the network elements used in the description and the terms used for them should not be interpreted so as to restrict the scope of the invention. The GSM system is a highly standardised system, the technology of which is well known to a person skilled in the art due to extensive documentation.

Figure 2 illustrates a preferred embodiment of the invention. Typically, a mobile station subscriber has the use of a mobile station MS suitable for both-way traffic. When being in the operating area of its own network (location POS1), the mobile station MS is in connection over the radio path, with base transceiver stations BTS1 of its own network. Each base transceiver station BTS1 is further in connection with a base station controller BSC1, which controls and administers a plurality of base transceiver stations. The entity formed by a plurality of base transceiver stations BTS1 (typically, some dozens of base transceiver stations) and a single base station controller BSC1 that controls them, is called a Base Station Sub-system BSS. The base station controller BSC1 is in connection with a Gateway-Mobile services Switching Centre G-MSC1, which co-ordinates with the help of a Home Location Register HLR and a Visitor Location Register VLR connections to mobile stations (the registers are not shown in the figure). Through the gateway-mobile services switching centre G-MSC1, a connection is further established to outside the mobile communication network. Calls directed to the subscriber are routed on the basis of a subscriber number to the gateway-mobile services switching centre G-MSC1.

When moving away from the area of its own network, the mobile station MS possibly moves into the area of a visiting network administered by a second operator (location POS2) and if an agreement has been made between the operators, the subscriber has the possibility of roaming in the visiting network. In this case, calls from the subscriber and to the subscriber are routed through the visiting network's base station sub-system BTS2, BSC2 and visiting centre G-MSC to one's own centre G-MSC1 and vice versa. Due to the agreement between operators, subscriber-specific invoicing and statistical data are updated from mobile communication systems' one operation and maintenance system to another, whereupon invoicing takes place through one's own operator. Thus, roaming from one network to another takes place substantially automatically from the subscriber's viewpoint, without separately attending to the matter.

As was already mentioned above, until now the reachability of a mobile subscriber during a flight has been based on fairly expensive and clumsy aircraft-specific solutions, where particularly the receiving of basic services has been impossible or based on fairly complicated and expensive call forwarding arrangements. Figure 2 illustrates an arrangement according to the first embodiment of the invention, which also enables the provision of more diversified services economically for passengers in an aircraft.

Recently, new solutions have been presented for integrating data transmission functions of companies so that a subscriber of a mobile communication network, when moving into the premises of his own company, changes over to use in data transmission the company's internal network. The applicant's earlier patent application WO 99/48311 presents a solution for combining a public and private data transmission networks so that when the subscriber is in the office, calls are routed to him through the company network and when the subscriber moves outside the company network's operating area, he will automatically be registered in a public mobile communication network. In the implementation of the present invention, it is possible to utilise network elements known from the publication mentioned above.

Figure 2 illustrates a comprehensive system relating to the invention. It shows the mobile telephone networks of two different operators, whereupon when the mobile station MS is in the operating area POS1, it is in the area of the mobile telephone network of a first operator, which network is illustrated by a gateway-mobile service switching centre G-MSC1, a base station controller BSC1 and a base transceiver station BTS1. When the MS in the operating area POS2, it is in the area of the mobile telephone network of a second operator, which network is illustrated by a gateway-mobile service switching centre G-MSC2, a base station controller BSC2 and a base transceiver station BTS2. The different mobile telephone networks are in connection with each other through the gateway-mobile service switching centres G-MSC1 and G-MSC2. The mobile telephone network G-MSC1 is further in connection with an operator's network O-LAN through an A-Gateway AGW. The A-gateway AGW converts PCM-based (pulse code modulated) communication into IP-based (Internet Protocol).

For implementing aircraft-related communication according to the invention, there is in the figure, on the left-hand side of the IP network an arrangement for this purpose according to one embodiment. A connection comes over the packet-switched IP network to a terrestrial gateway TeGW, which establishes a connection towards an aircraft through a satellite connection GES, SAT to the aircraft, where there is a local network administered by an aviation gateway AvGW for terminals (which preferably is a wireless short range network). In the following, the section in the figure 2 on the left-hand side of the IP network will be called an aircraft network, wherein the entity formed by elements SC, AvGW, AP and MS in the aircraft will be called an air network and the entity formed by elements IMS, MTS and BTS will be called a ground network L-LAN.

In the operator's network O-LAN, the A-gateway AGW preferably connected to the gateway-mobile service switching centres G-MSC1 through an A interface manages routing and signalling between the aircraft network and the mobile communication network. Towards the gateway-mobile service switching centre G-MSC1, the A-gateway AGW has a conditional connection, whereupon the aircraft network seems to the gateway-mobile service switching centre G-MSC1 as a single base station sub-system BSS, which has its own Location Area Code LAC. Thus, towards the aircraft network, the AGW operates in the packet-switched mode, preferably according to the specification H.323 relating to the ITU (International Telecommunication Union) multimedia data transmission, i.e. converts communication from PCM format into IP format and vice versa. The gatekeeper AGW, which can be used in the present invention, is described in the patent application WO 99/48311 mentioned above.

The mobile communication system comprises a conventional home location register HLR (not shown in the figure) for preserving permanent subscriber data and one or more visitor location registers VLR (not shown in the figure) for preserving the subscriber data required in the establishment of a connection when the subscriber is registered in the area of a visitor location register. The operator's network O-LAN also has an Intranet Location Register ILR for maintaining subscriber data as for the aircraft network. All terminals configured in the aircraft network are registered in the intranet location register ILR, and when a terminal is in the aircraft network' operating area (location POS3 or POS5), said ILR specifications become valid. The intranet location register ILR operates further as an access controller, for example, to the home location register HLR, visitor location register VLR, invoicing system and intelligent services of the mobile communication system implementing the required database searches and upgrades for enabling services to be implemented through the aircraft network.

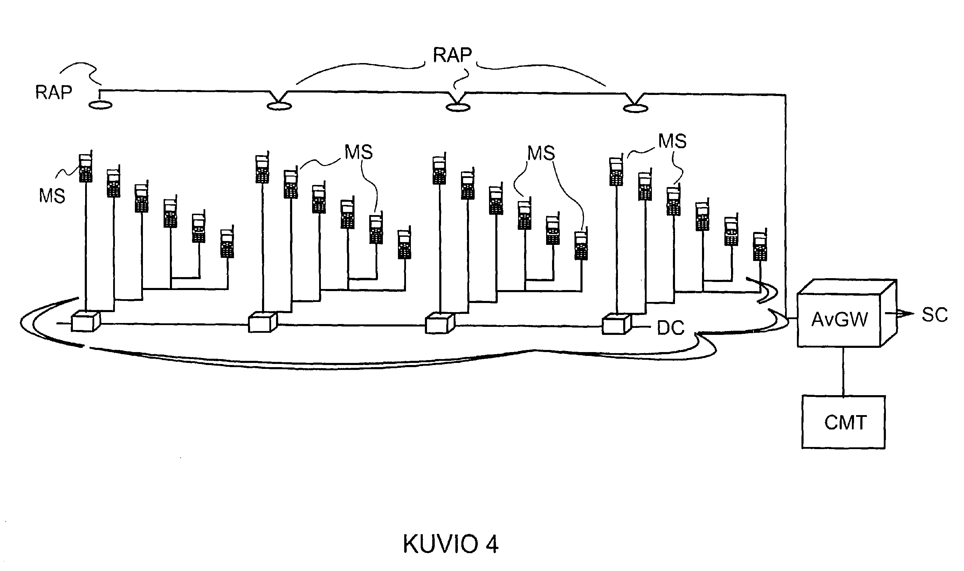

With the help of the arrangement shown in Figure 2 a subscriber may operate with the help of the same mobile station either through a terrestrial small local area network, i.e. ground network (POS5) or through the local area network of an aircraft, i.e. an air network (POS3) without having to separately take care of the implementation of optimised reachability. The subscriber may use, for example, a dual-mode terminal, which comprises a conventional mobile station part and a WLAN part so that the terminal preferably operates in the WLAN mode when it has an opportunity to establish a connection to the air network of the aircraft network (location POS3) or a WLAN Access Point AP, i.e. a base transceiver station (described in more detail in Figure 4) arranged in the ground network (location POS5). As for the WLAN functionality, a reference is made, e.g. to the IEEE Standard 802.11 (The Institute of Electrical and Electronics Engineers) and the publication WO 99/48315.

A satellite link to be used for a network element according to the invention is transparent and, thus, any current (circuit-switched) system can act as a satellite link. At the moment, alternative systems are, for example, Inmarsat H/H+, Iridium, Teledesic. A satellite connection from a terrestrial gateway TeGW can be established through a satellite server GES. The administrator of the server GES can be, for example, a satellite company, a telephone operator, an airline company or a mobile telephone operator and, typically, the satellite link provides a limited number of conditional connections.

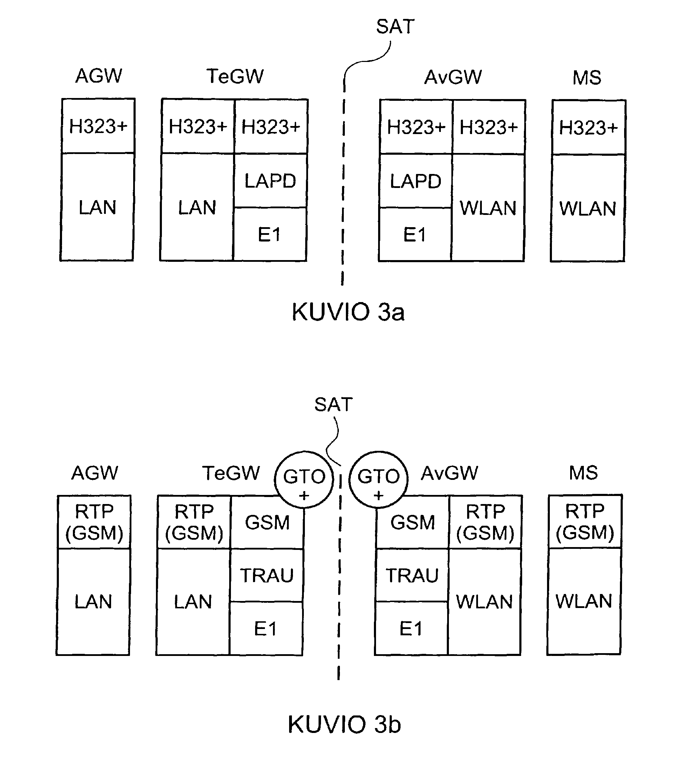

In the invention, a channel of its own is reserved for signalling and calls are switched on separate speech channels. A plurality of calls are multiplexed on the same speech channel and preferably, the signalling of all the speech channels is managed on one common signalling channel. Speech and signalling channels are outlined in Figures 3a and 3b, which show the principle by way of example using for the speech channels by a satellite link CEPT E1-signalling (Conference of European Post and Telephone Administrations), which is controlled with the help of 2-layer LAPD (Link Access Procedure on the D-channel) protocol, i.e. LAPD is used on a separate signalling channel. It should be noted that although here the invention is presented with the help of an E1 link, neither the presented protocols nor the terms used in connection with them should be considered as restricting the scope of protection.

In the embodiment according to Figure 2, a satellite channel is dynamically reserved either by a terrestrial gateway TeGW or by an aviation gateway according to the direction of the call. In this embodiment, traffic on the ground and in the aircraft is preferably of IP (Internet Protocol), i.e. packet mode. In this case, when a packet to be transmitted arrives at the gateway TeGW or AvGW, the gateway in question initiates the establishment of a satellite connection and adapts the information contained by the packet to a satellite channel. The gateway adapts packets relating to different calls to the same satellite channel, whereupon it is possible to manage even as many as 4-8 calls over a single satellite channel. This is possible when the satellite channel is implemented as a 64-kbps channel. In this case, e.g. a full rate call of the GSM system takes 16 kbps, whereupon four full rate calls of this type can be time-division multiplexed on the same satellite channel. Correspondingly, a half rate call takes 8 kbps, whereupon eight half rate calls can be time-division multiplexed on the same satellite channel. The packet size in TCP/IP protocol is 64 kbps, but most of it is overhead data and the actual information part is approximately 13.3 - 16 kbps, whereupon in practice, the information contained by a single packet fits in a single multiplexed portion on a satellite channel when full rate calls are being transferred. Thus, the information of even 4 different TCP/IP packets can be transferred on a single satellite channel. A connection on the satellite channel is opened when there are not yet any calls and when a first call comes in. When a second call comes in on the channel, there is no need to open the connection anymore if one call is already being managed on the channel in question, but the next call will be multiplexed on the already opened channel.

In one embodiment of the present invention, a subscriber's terminal MS is preferably a WLAN mobile station, which is a single-mode H.323 compatible wireless WLAN mobile station or a dual-mode mobile station comprising both said WLAN functionalities and the functionalities of a mobile communication network (e.g. GSM). One dual-mode mobile station of this type is presented in the above-mentioned publication WO 99/48315. Figure 3a shows a preferred protocol stack of the arrangement according to Figure 2, i.e. Figure 3a shows the protocol used on a separate common signalling channel according to the invention and Figure 3b shows, respectively, preferred protocols for the actual call traffic (data or speech), i.e. Figure 3a shows the used protocol for the information of a call, which is used, e.g. in the invention for calls multiplexed to a speech channel of a satellite connection. In Figures 3a and 3b, the markings AGW, TeGW, AvGW and MS present the corresponding elements in Figure 2 and, thus, Figures 3a and 3b show protocol stacks of these devices in the arrangement shown in Figure 2. In Figure 3a, the protocol of the aircraft's access network is WLAN according to the IEEE 802.11 standard and the multimedia standard is H.323 (shown in Figure 3a under the markings AvGW and MS). Hence, the terminal MS to be used in an airplane can be a subscriber's own device, which lacks the radio parts that are unsuitable for an aircraft or the parts have been switched off or a fixed terminal installed in the aircraft.

Figure 4 shows one embodiment according to the invention, where a set of WLAN terminals MS are integrated into the seats of an aircraft which, thus, are wireless equipment, which preferably have a battery the charging of which takes place, e.g. from DC chargers of a DC network DC integrated into the seats. Preferably, communication in the airplane is implemented with the help of a wireless, short range connection, which can be said connection according to the WLAN standard by means of which a few dozen metres long range can be achieved or, for example, a LPRF (Low-Power RF) connection according to the Bluetooth standard by means of which a range of about ten metres is achieved. For this, a WLAN or LPRF module is further integrated, e.g. into an ordinary GSM mobile phone. This being the case, a mobile phone of a mobile communication system can also be used in an airplane, optimised by one's own phone number and at an optimised call price. Currently, this is not possible because the high-power (and bursty) transmissions of a mobile communication system cause interference in the control equipment of airplanes.

In the arrangement according to Figure 4, a mobile subscriber when stepping in an aircraft moves the identification module of a mobile communication system, typically his SIM (Subscriber Identity Module) card, into a terminal integrated into his seat, whereupon the terminal initiates a location updating function. If the user has in his use a H-323 compatible wireless WLAN mobile station, the location updating function will be initiated automatically without the subscriber's own activities. Subscriber identification takes place with the help of the SIM card according to the mobile communication network's strict principles of identification. Identification can also be arranged to take place on the basis of some other smart card or, for example, an electronic fingerprint but, in this case, the solid identification typical of mobile communication systems must be managed programmably.

Mobile stations MS communicate with the aircraft's ordered WLAN Radio Access Points RAP. The access points RAP operate as small range base stations providing radio coverage for the aircraft, e.g. on the frequency bands of 2.4 GHz or 5 GHz. Typically, one RAP is capable of communicating with more than one terminal. The access points RAP are connected to an aviation gateway AvGW arranged in the airplane, preferably through the Ethernet or Token Ring LAN. For example, Nokia A020 and Nokia A021 Wireless LAN Access Point products are known as such access points RAP. Furthermore, the system in the airplane may include a cabin management terminal CMT, which is placed in the cockpit of the airplane and by which call traffic can be allowed or switched off, depending on the situation. This terminal CMT can be a simple ON/OFF switch or a more sophisticated computer-like terminal comprising a graphical access by which traffic on separate channels can be monitored and controlled.

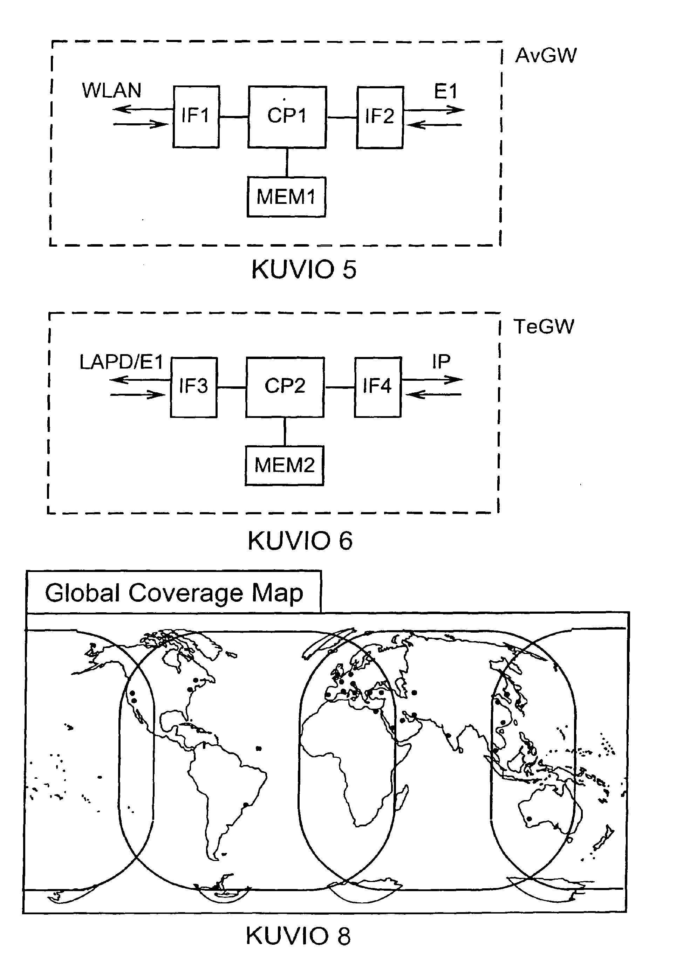

The aviation gateway AvGW is a unit, which according to Figures 3a and 4 comprises a functionality for converting H.323 traffic from the protocol format used in an airplane into the protocol format of a satellite link and vice versa, i.e. in this case, between the WLAN and the LAPD (Link Access Procedure on the D-channel) -controlled E1 signal flow. The signalling of even 100 calls can be managed on a single signalling channel, i.e. LAPD channel. The simplified block diagram in Figure 5 illustrates the equipment architecture of the aviation gateway AvGW. The AvGW comprises a first access unit IF1, which receives data units from access points RAP and supplies data units to access points RAP according to the protocol (here: WLAN) used in the aircraft. The AvGW further comprises a second access unit IF2, which receives data units from a satellite data transmission unit SC and supplies data units to a satellite data transmission unit SC according to the protocol (here: LAPD/E1) used in satellite traffic. The AvGW also comprises a memory MEM for preserving programmably implemented algorithms and a processor CP1 for retrieving said algorithms from the memory MEM1 and for processing them for implementing the functionalities of the aviation gateway AvGW. According to the invention, the functionality of the aviation gateway AvGW comprises giving a satellite connection establishment request to the satellite data transmission unit SC in response to the connection establishment request of some mobile station MS registered in the aircraft. According to the invention, the functionality of the aviation gateway AvGW also comprises responding to the satellite connection establishment request in response to an establishment request obtained through the satellite data transmission unit SC (shown in Figure 2) and initiating the establishment of the connection to the mobile station MS in response to a connection establishment message received from the satellite data transmission unit.

On the other side of a satellite link SAT, a corresponding network unit terrestrial gateway TeGW is functionally connected to the satellite server GES, which TeGW contains a functionality for forwarding telecommunication between the satellite link and the gateway-mobile services switching centre G-MSC1. In the example shown in Figure 2, the connection is implemented in the packet-switched mode. The simplified block diagram in Figure 6 illustrates the equipment architecture of the terrestrial gateway TeGW. The TeGW comprises a first access unit IF3, which receives data units from the satellite server GES and supplies data units to the satellite server GES according to the protocol (here: LAPD/E1) of the satellite link. The TeGW further comprises a second access unit IF4, which receives data units from a packet-switched data transmission network IP and supplies data units to the packet-switched data transmission network IP according to the protocol (here: IP) used in the network. The TeGW also comprises a memory MEM2 for preserving programmably implemented algorithms and a processor CP for retrieving said algorithms from the memory MEM2 and for processing them for implementing the functionalities of the terrestrial gateway TeGW. According to the invention, the functionality of the terrestrial gateway TeGW comprises giving a satellite connection establishment request to the ground station GES in response to a connection establishment request received from the gateway-mobile services switching centre G-MSC1. According to the invention, the functionality of the terrestrial gateway TeGW also comprises replying to the satellite connection establishment request in response to the establishment request obtained through the ground station GES and initiating the establishment of the connection in response to a connection establishment message received from the gateway-mobile services switching centre G-MSC1.

As can be seen from above, the AvGW does not require a continuous connection to terrestrial network elements, but the connection is an input connection that functions according to the data units obtained from the satellite data transmission unit SC or supplied to the satellite data transmission unit. This effects a considerable saving in the use of a satellite resource and, thus, also in costs resulting from the arrangement.

In the following, the presented arrangement will be described with the help of signalling and communication relating to call set-up. The signalling of an MT (Mobile Terminating) call terminating at a mobile station MS located in an airplane is routed on the basis of the number to a gateway-mobile services switching centre G-MSC1 and from the centre on the basis of the location area to an A-gatekeeper AGW. According to Figure 3a, the AGW converts the signalling of a mobile communication network into the packet mode, preferably into H.323 signals, and packs the signals into the protocol format LAN of a local area network, which is preferably IP. The AGW routes the data packets to a gatekeeper MTS (Mobile Telephony Server). The MTS broadcasts paging through all the IMC (Intranet Mobile Cluster) units administered by it and, on the basis of the reply it receives, it routes the data packets arrived for the subscriber to a terrestrial gateway TeGW. The TeGW carries out a protocol conversion for the received data packets for a satellite link, typically into LAPD (Link Access Procedure on the D-channel) -controlled E1 signal flow, and opens a satellite link through the ground station GES.

A gatekeeper MTS is an element on the side of an aircraft network that implements the controlling of connections. In the aircraft network, a incoming call for a subscriber who is either in an air network (location POS3) or in a ground network (location POS5) is routed on the basis of the location area to an A-gatekeeper AGW, which routes the data packets to the gatekeeper MTS. The MTS broadcasts paging through all the IMC units administered by it and, on the basis of the reply it receives, routes the data packets arrived for the subscriber to the right address on the basis of the IP address. A gatekeeper that can be used in the present invention is described in the above-mentioned patent application WO 99/48311, where it is referred to by the acronym WIO GK (Wireless Internet Office Gate Keeper). In prior art, commercial H.323 gatekeepers are also known.

IMC units are substantially controllers that implement functions of a base station controller BSC in a packet switched environment. The IMC controls through a conditional connection one or more base transceiver stations BTS3 subordinated thereto, and converts the packet mode communication of a ground network L-LAN into a format supported by the base transceiver station BTS3. The IMC also controls possible handovers and power regulation functions during a call. An IMC unit, which can be used in the present invention, is described in the above mentioned patent application WO 99/48311.

The AvGW carries out a protocol conversion for the signal flow obtained over the satellite link and the satellite data transmission unit SC into the protocol format of the internal access network of the airplane, which preferably is WLAN according to the IEEE 802.11 standard. At a radio interface, Low Power Radio Frequencies (LPRF) can preferably also be utilised. When a connection has been established, call traffic between the terminal MS and the aviation gateway AvGW is implemented according to Figure 3b, preferably according to Real Time Protocol (RTP), and the AvGW comprises a functionality for packing data in TRAU frames for the E1 connection of the satellite link. Thus, in this example of the invention, the actual call information (i.e. 16kbps or 8kbps) is packed in TRAU frames, which are multiplexed to a speech channel, whereupon in the presented example, 4-8 TRAU frames are transferred on a single speech channel. The circle GTO+ Illustrates a functionality of the system controller AvGW for mapping RTP gate numbers into E1 timeslots and vice versa.

Preferably, the AvGW also comprises a continuously operating operation and maintenance functionality, which collects in the memory MEM1 operating data on the aircraft and status data of the system, e.g. call statistics, identification data, alarm data, etc. A packet comprising said data is transmitted, e.g. according to a schedule agreed in advance or as a reply to polling by a terrestrial operation and maintenance function to an operation and maintenance system on the ground, which updates the events according to the received packets. The operation and maintenance system can be, e.g. an operator of a satellite operator, company network, mobile communication network or another network or some combination of the above, that takes care of operation and maintenance. In this case, the use of a satellite link required by the system is little, but it enables, e.g. automatic processing of invoicing data through a subscriber's own operator. Said data also enable a centralised and automated monitoring function of the system elements without a continuous satellite connection.

It is possible to arrange for the crew of the aircraft a corresponding access or a so-called cabin management terminal CMT (see Figure 4) to the aviation gateway AvGW so that also the crew are able to examine the state of the equipment on the basis of the operation and maintenance notices stored in the memory. Through said access CMT, it is possible for the crew to give the aviation gateway AvGW a switch-off command for the duration of the plane's take-off and landing. In response to the switch-off command, the AvGW generates a switch-off signal to be transmitted to the terrestrial gateway TeGW on the basis of which the TeGW will generate to the gatekeeper MTS a notice relating to the deactivation of its functions, after which the establishment of a connection to the aircraft is impossible until a new, corresponding activation notice generated on the basis of the activation command of the crew of the airplane, is received.

Preferably, the aviation gateway AvGW also comprises a functionality on the basis of which, in the event of an outgoing MO (Mobile Originating) call from a terminal MS in an aircraft, the gatekeeper checks from a memory MEM, whether a subscriber B that receives the call is also registered under the gatekeeper AvGW. If this is the case, the AvGW will route the call directly inside the airplane, whereupon unnecessary loading of the satellite link will be avoided.

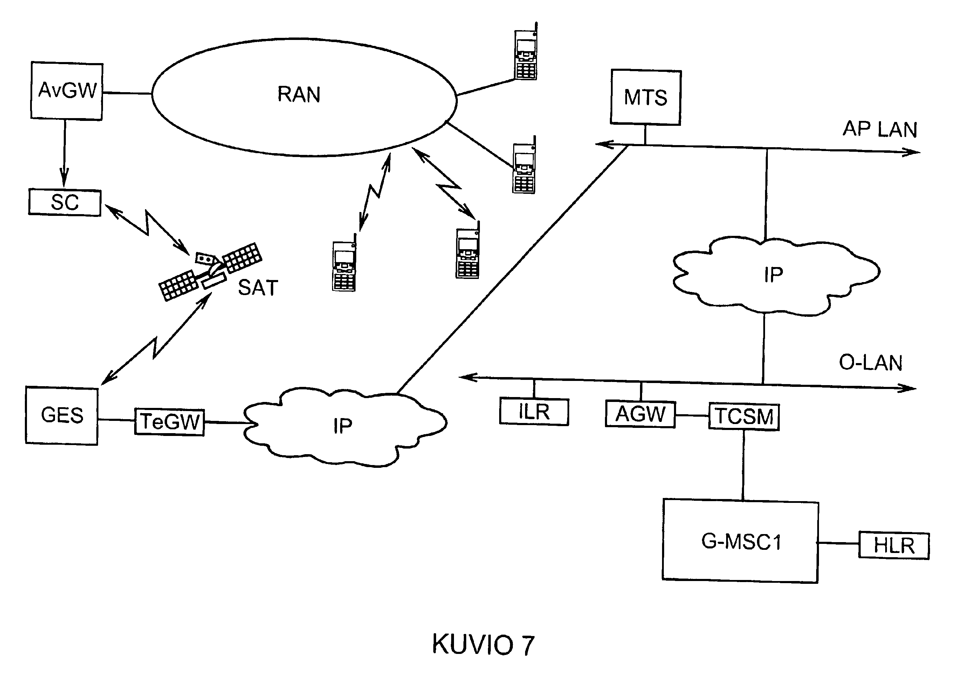

Figure 7 shows a second embodiment of the arrangement according to the invention. In the presented embodiment, the operator's network O-LAN is through an IP network in connection with the airport's own network AP LAN, the gatekeeper MTS of which takes care of the management of connections for several parties, e.g. several airline companies. In Figure 7, the gateway-mobile services switching centre G-MSC1 of a mobile communication network is through the A-gateway AGW in connection with the airport's network AP LAN. In between the gateway-mobile services switching centre G-MSC1 and the A-gateway AGW, there is typically a Transcoder Sub Multiplexer TCSM, which is not shown in Figure 2 for the reason of simplicity. From the gatekeeper MTS of the airport's network, there is an IP-switched connection to the aircraft network's terrestrial gateway TeGW, from where there is a connection to the aircraft in a manner similar to that shown in Figure 2. With the implementation example according to Figure 7, there is a desire to illustrate that a connection to an aircraft can go hierarchically through a second network, here the airport's network AP LAN, which only serves and administers connections to different airplanes, but not terrestrial base transceiver stations, such as the gatekeeper MTS of a ground network L-LAN. This being the case, the gatekeeper MTS of the airport's network does not have to take care of all the functionalities relating to the administration of the mobility of a terrestrial system and so said keeper MTS can be implemented in a more simple way and, thus, more economically compared to the embodiment shown in Figure 2. The capacity of one terrestrial gateway TeGW is typically sufficient to take care of 110-120 GSM Full Rate speech channels and, thus, double the number of GSM Half Rate speech channels and so one TeGW is probably enough to manage the connections of the aircraft of one airline company in the coverage area of one ground station GES. In a similar manner as in Figure 2, gateways TeGW and AvGW manage the reservation of a satellite channel and the multiplexing of calls.

Figure 8 shows the coverage areas of Inmarsat satellites. It can be seen from the figure that when flying, e.g. from Finland to the USA, during the journey the aircraft moves from the coverage area of one satellite into that of another. This means that the satellite link server GES that communicates with the aircraft's satellite data transmission unit SC also changes. Due to packet switched data transmission, Mobile IP functionalities can be utilised in roaming. Mobile IP is a protocol still being standardised, for a more detailed description of which a reference is made to the Internet Engineering Task Force (IEFT) software Request For Comments (RFC) 2002. Mobile IP describes the Home Agent (HA) of a network element to be connected to the home network of a mobile subscriber, which home agent when the subscriber moves away from the home network maintains the information on the subscriber's address and routes the data packets directed to the mobile subscriber to the address at which the subscriber is registered at that moment. Due to this, data packets are routed to the subscriber's new address (e.g. from one satellite link server to another) without these being lost considerably when moving from one place to another.

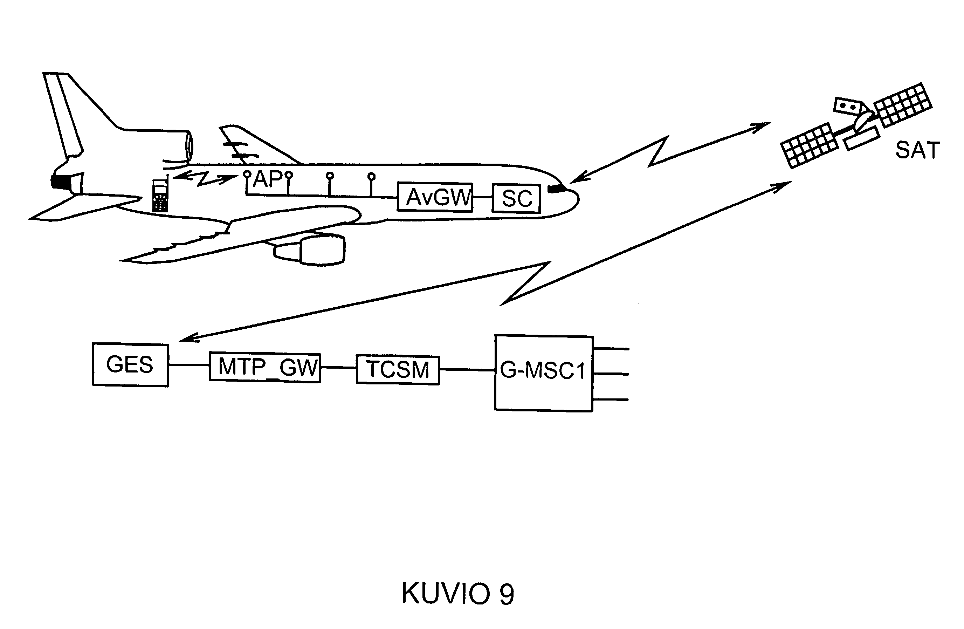

Figure 9 shows a third preferred embodiment of an arrangement according to the invention, where data transmission to an aircraft is implemented substantially without an IP network. In this case, after the gateway-mobile services switching centre G-MSC1, no A-gatekeeper AGW that converts PCM traffic into IP traffic is required. Thus, in the solution according to Figure 9, traffic outside the satellite network, i.e. in the aircraft and on the ground is also continuous, i.e. circuit-switched. On the ground, the connection between the satellite server GES and the gateway-mobile services switching centre G-MSC1 is implemented in E1 format making use of a Message Transfer Part Gateway MTP_GW implementing unconditional link administration, which is functionally connected to the TansCoder SubMultiplexer TCSM of the gateway-mobile services switching centre G-MSC1.

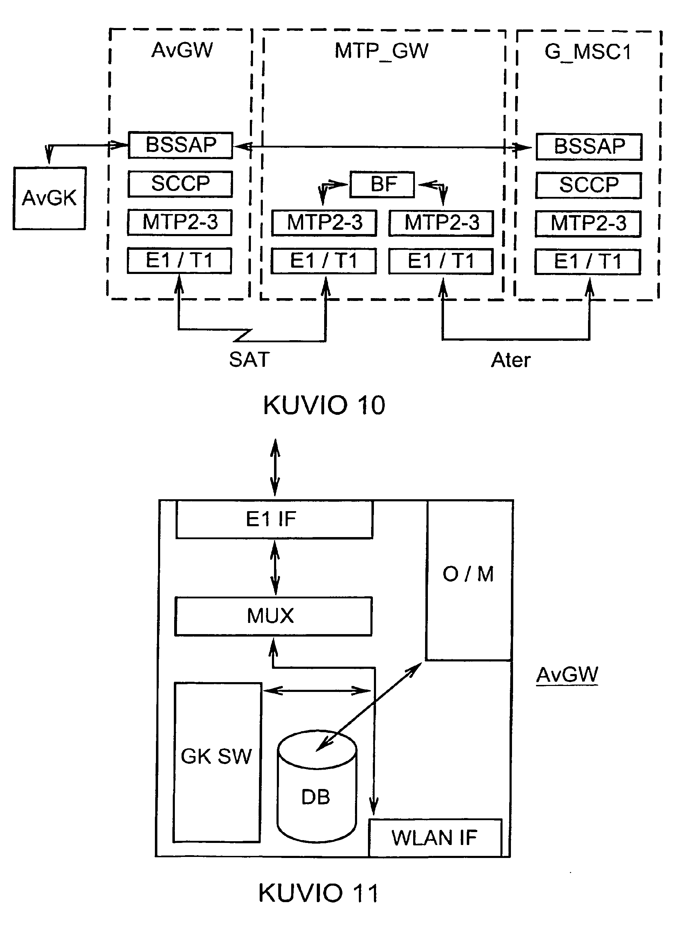

Figure 10 illustrates the implementation of the message transfer part gateway MTP_GW shown in Figure 9 with the help of protocol layers E1/T1, MTP2-3, SCCP (Signalling Control and Connection) and BSSAP (Base Station Signalling Application Part), of which the SCCP and BSSAP are known layers from the A-interface of the GSM system. The interface between the message transfer part gateway MTP_GW and the gateway-mobile services switching centre G-MSC1 is a normal Ater (which is an interface known from the GSM system), and the signalling connection for the layers E1/T1 and MTP2-3 is continuously operating. A bridge functionality BF of the message transfer part gateway MTP_GW maintains a continuously operating connection towards the gateway-mobile services switching centre G-MSC1, but initiates the establishment of a connection through a satellite link towards the aviation gateway AvGW only after obtaining an indication of traffic. The SCCP layer itself, on the side of the G-MSC1 and AvGW, is a continuously operating connection and so the bridge functionality BF interrupts it so that the connection seems continuous in both directions, but it reserves a satellite channel according to the invention only when there is need, i.e. some information to be transmitted (speech or data). The satellite connection is preferably a circuit-switched connection but, consequently, it is initiated only when necessary, i.e. dynamically. For example, in case of a connection establishment request coming from the direction of the gateway-mobile services switching centre G.MSC1, the bridge functionality BF is arranged to detect an MTP_TRANSFER_INDICATION message in response to which the bridge functionality BF initiates the establishment of a satellite connection, if such is not in use already. Typically, at the A-interface, the MSC decides on the use of timeslots, but over the satellite link the functionality is arranged in the bridge functionality. Furthermore, in the message transfer part gateway MTP_GW there are standard-like protocol layers MTP2 and 3 and E1/T1 on both sides of the bridge functionality BF.

On the other side of the satellite link, an aviation gateway AvGW is arranged in the aircraft, which gateway substantially implements the protocol conversion in the protocol used in the aircraft. An aviation gatekeeper AvGK (which in Figure 9 is included in the aviation gateway AvGW) is functionally connected to the aviation gateway AvGW. The aviation gatekeeper AvGK has a direct access interface with a GSM BSSAP protocol layer, which are used for call control signalling at the satellite and A-access interfaces. The arrow from the gateway-mobile services switching centre G-MSC1 to the aviation gateway AvGW directly through the message transfer part gateway MTP_GW shows how traffic between the AvGW and the G-MSC1 seems continuous and the interrupting of traffic carried out in the message transfer part gateway MTP_GW neither shows nor interferes with the traffic. Polling is preferably transferred to the aviation gateway AvGW through a satellite system control channel, e.g. channel C of the Inmarsat system.

Figure 11 illustrates in more detail the functional structure of the aviation gateway AvGW, which also contains the functionality of the aviation gatekeeper AvGK shown in Figure 10. The aviation gateway AvGW comprises a first access interface WLAN IF for giving and taking messages according to the protocol (here: WLAN) used in an aircraft. The aviation gateway AvGW also comprises a second access interface E1 IF for giving messages to a satellite data transmission unit SC and for taking messages from the satellite data transmission unit SC. The aviation gateway AvGW also comprises a multiplexer MUX or some other type of known converter, which interleaves the data communicated by terminals in the aircraft to and from a single satellite channel, preferably using time division so that four 16 kbps calls can be interleaved on a single 64-kbps channel. The channel itself, on which interleaving is carried out, can be, e.g. E1 timeslot. The gatekeeper application GK SW describes functionalities known in connection with the A-gatekeeper AGW for converting and controlling traffic between a company network, which in this case is the aircraft's access network RAN, and a mobile communication network. The gatekeeper application GK SW is responsible for establishing a connection to a terminal or over a satellite link to a mobile services switching centre MSC-GW1 on the basis of messages obtained from the access interface E1 IF or WLAN IP. For example, when a subscriber in the aircraft initiates a call, the call arrives through the access interface WLAN IF to the aviation gateway AvGW, which converts the connection establishment request into a GSM message, which is included in SCCP messages to be transmitted to the mobile communication network as a MTP_TRANSFER_REQUEST message. The gatekeeper application GK SW gets the information from the SCCP layer about the establishment of the MTP_TRANSFER_REQUEST message and is adapted in response to the establishment of said message to initiate functionalities for opening a satellite connection through a ground station GES to a message transfer part gateway MTP_GW. It should be noted that because the subscriber does not move during the flight from one airplane to another, some of the functionalities related to the mobility management of the A-gatekeeper AGW can be left unimplemented in the aviation gateway AvGW.

In the aviation gatekeeper, there is preferably installed a management unit O/M, which is preferably implemented programmably and which is functionally related to a database DB. The management unit O/M manages, e.g. alarms given by access interface cards and multiplexers added to the aviation gatekeeper, as well as alarms given by WLAN base stations (or access points RAP) and terminals that have come through an access network RAN, which are also stored in the database DB. The management unit O/M preferably comprises an access for directing the most essential alarms to the aircraft's controls. The management unit O/M preferably comprises a functionality for generating a message comprising alarm and statistical data. The message is preferably packed in a compressed format and transmitted through a satellite link control channel and an IP network to a terrestrial management system at specific intervals or in response to an interrogation given from the management system. Terrestrial Network Management Systems (NMS) are known in the GSM system, e.g. in connection with the base station controller BSC and the mobile services switching centre MSC. In addition to the network management functionalities of the mobile communication network, the monitoring of the use and condition of the in-flight telephone system in an aircraft can be implemented in a centralised fashion, e.g. from the airline company's control centre, which in the example according to Figure 7 can be located in the airport's network AP LAN.

The more detailed implementation of the terrestrial gateway TeGW may be similar to that of the aviation gateway AvGW. Thus, it also has a multiplexer MUX, which time division multiplexes the outgoing calls to a satellite channel on the same channel, e.g. 4-8 calls, as was explained above. In the message transfer part gateway MTP_GW, multiplexing is included in the bridge function BF.

This paper presents the implementation and embodiments of the present invention with the help of examples. A person skilled in the art will appreciate that the present invention is not restricted to details of the embodiments presented above, and that the invention can also be implemented in another form without deviating from the characteristics of the invention. The embodiments presented above should be considered illustrative, but not restricting. Thus, the possibilities of implementing and using the invention are only restricted by the enclosed claims. Consequently, the various options of implementing the invention as determined by the claims, including the equivalent implementations, also belong to the scope of the invention.

## Claims

1. A data transmission system for switching a call to a terminal in an aircraft over a satellite link, which system comprises
a terminal (MS) to be used in an aircraft;
a terrestrial network (G-MSC1);
a satellite link (GES, SAT, SC) between the aircraft and the terrestrial network,
a first network element (TeGW; MTP_GW) on the ground between the terrestrial network and the satellite link (GES, SAT, SC);
a second network element (AvGW) in the aircraft between the satellite link and the terminal of the aircraft, and
at least one of said first and second network elements comprises means (MUX, BF) for interleaving at least two calls on the same satellite channel,
**characterised in that**
at least one of said first and second network elements (TeGW; MTP_GW, AvGW) is arranged to open a data transmission connection on said channel of the satellite link as there is information to be transmitted and to close said data transmission connection when there is no information to be transmitted.

2. A system according to claim 1, **characterised in that**
said system comprises in the aircraft a short range wireless connection (WLAN, LPRF) between said second network element (AvGW) and the terminal (MS) of the aircraft.

3. A system according to claim 1, **characterised in that** said terrestrial network comprises a mobile communication network, which comprises a gateway-mobile services switching centre (G-MSC1) functionally connected to said first network element (TeGW; MTP_GW) and a terminal (MS) of the mobile communication network, and that said terminal (MS) of the mobile communication network comprises means for establishing a connection to said second network element for acting as a terminal of the aircraft.

4. A system according to claim 1, **characterised in that** said means (MUX, BF) for interleaving calls is a multiplexer (MUX), which is arranged to time division multiplex at least two calls on the same channel of the satellite link.

5. A system according to claim 1, **characterised in that** said satellite link comprises call channels (E1, TRAU) for transferring calls and a separate signalling channel (E1, LAPD) for transferring the signalling related to a plurality of calls on said signalling channel, and the system comprises means (TeGW; MTP_GW, AvGW) for transferring calls on a speech channel of the satellite link and for transferring the signalling data on a plurality of calls to said plurality of calls on a common signalling channel of the satellite link.

6. A system according to claim 5, **characterised in that** the signalling data of all the calls to be transferred by the satellite link are transferred on said common signalling channel.

7. A system according to claim 3, **characterised in that** said first network element (TeGW) comprises means (CP2, IF4) for receiving signals from the gateway-mobile services switching centre (G-MSC1) and for transmitting to the gateway-mobile services switching centre (G-MSC1).

8. A system according to claim 7, **characterised in that** the system comprises a first unit (GES) responsible for the control of the satellite link, and said first and second network elements (AvGW, TeGW, MTP_GW) both comprise means (CP2, IF3) for receiving signals from the first unit (GES) responsible for the control of the satellite link and for transmitting to the first unit (GES) responsible for the control of the satellite link.

9. A system according to claim 8, **characterised in that** said first network element (TeGW) comprises means (CP2, IF3, IF4) for initiating the opening and closing of a channel of the satellite link on the basis of signals received from the gateway-mobile services switching centre (G-MSC1).

10. A system according to claim 8, **characterised in that** said second network element (AvGW) comprises means (CP2, IF3, IF4) for initiating the opening and closing of the satellite link on the basis of signals received from the terminal (MS) of the aircraft through the satellite link (GES, SAT, SC).

11. A system according to claim 3, **characterised in that** the system comprises means (AGW, IP) for maintaining the data transmission connection between said first network element (TeGW) and the gateway-mobile services switching centre (G-MSC1) in the packet-switched mode.

12. A system according to claim 1, **characterised in that** said second network element (AvGW) comprises means (CP1, IF3) for receiving signals from the terminal (MS) of the aircraft and for transmitting to said terminal (MS).

13. A system according to claim 12, **characterised in that** the system comprises in the aircraft a second unit (SC) responsible for the control of the satellite link, and said second network element (AvGW) comprises means (CP1, IF4) for receiving signals from the second unit (SC) responsible for the control of the satellite link and for transmitting to the second unit (SC) responsible for the control of the satellite link.

14. A system according to claim 12, **characterised in that** said second network element (AvGW) comprises means (CP1, IF1, IF2) for initiating the opening and closing of the satellite link on the basis of signals received from the terminal (MS) of the aircraft.

15. A system according to claim 1, **characterised in that** the system comprises a plurality of aircrafts and on the ground a server (MTS) that is in connection with said first network element (TeGW) for controlling the connections of the aircraft group formed of the plurality of aircrafts.

16. A system according to claim 3, **characterised in that** said second network element (MTP_GW) comprises a bridge functionality (BF) for adapting the protocol of the mobile communication system for a satellite link.

17. A system according to claim 12, **characterised in that** said second network element (AvGW) comprises means (O/M, DB) for collecting and storing in-flight management data.

18. A system according to claim 17, **characterised in that** said second network element (AvGW) comprises means (O/M, DB) for transmitting the in-flight management data through a satellite link to a gateway-mobile services switching centre (G-MSC1).

19. A system according to claim 3, **characterised in that** said second network element (AvGW) comprises means (CP1, MEM1) for identifying terminals of a mobile communication network registered in an aircraft and for transmitting the identification data of the terminals to a gateway-mobile services switching centre (G-MSC1) for switching the incoming calls to a terminal through a satellite link to the terminal located in the aircraft.

20. A system according to claim 1, **characterised in that** data transmission on the channel of the satellite link is circuit-switched, and data transmission between the first network element and the terrestrial network, as well as the second network element and the terminal is packet-switched.

21. A system according to claim 1, **characterised in that** said terminal is a dual-mode terminal of a mobile communication system, which in addition to said short range connection is adapted to communicate over a connection of the mobile communication system.

22. A network element (AvGW) in an aircraft that is in connection with a satellite link for switching a call on a channel of the satellite link (GES, SAT, SC), which network element comprises means (IF2, IF3) for receiving information from the satellite link and for transmitting to the satellite link, and said network element (AvGW) comprises means (MUX) for interleaving at least two calls on the same channel of the satellite link, **characterised in that** said network element (AvGW) comprises means (CP1, IF1) for connecting the network element in a functional connection to a terminal (MS) of an aircraft for receiving signals from and for transmitting to the terminal (MS) utilizing a short range wireless connection (WLAN, LPRF) between the network element (AvGW) and the terminal (MS) of the aircraft, and that said network element (AvGW) is arranged to open a data transmission connection on said channel of the satellite link as there is information to be transmitted and to close said data transmission connection when there is no information to be transmitted.

23. A method for switching a call to a terminal in an aircraft over a satellite link, the method comprising
transmitting information relating to a call between a terrestrial network and the satellite link (GES, SAT, SC) through a first network element (TeGW; MTP_GW) located on the ground,
transmitting information relating to a call between the satellite link and the terminal of the aircraft through a second network element (AvGW) located in the aircraft,
interleaving (MUX) at least two calls on the same channel of the satellite link, and
carrying out said interleaving by at least one network element of said first and second network elements as said at least one network element has information relating to at least two calls to be transmitted towards the satellite link **characterised in that** the method comprises
opening in at least one of said first and second network elements (TeGW; MTP_GW, AvGW) a data transmission connection on said channel of the satellite link as there is information to be transmitted and to close said data transmission connection when there is no information to be transmitted.

24. A method according to claim 23, **characterised in that** at least two calls are time division multiplexed (MUX) on the same channel of the satellite link.

25. A method according to claim 23, **characterised in that** the method comprises
transferring the calls on a call channel (E1, TRAU) of the satellite link and
the signalling data of a plurality of calls are transferred to said plurality of calls on a common signalling channel (E1, LAPD) of the satellite link.

26. A method according to claim 25, **characterised in that** there are a plurality of call channels and the signalling data of all the calls transferred over the satellite link are transferred on said common signalling channel (E1, LAPD).

27. A method according to claim 23, **characterised in that** the method comprises utilizing a short range wireless connection (WLAN, LPRF) between the second network element (AvGW) and the terminal (MS) of the aircraft.

## Patentansprüche

1. Datenübertragungssystem zum Vermitteln eines Anrufs an ein Endgerät in einem Luftfahrzeug über eine
Satellitenverbindung, wobei das System folgendes umfasst:
ein Endgerät (MS) zur Benutzung in einem Luftfahrzeug;
ein terrestrisches Netz (G-MSC1);
eine Satellitenverbindung (GES, SAT, SC) zwischen dem Luftfahrzeug und dem terrestrischen Netz;
ein erstes Netzelement (TeGW; MTP_GW) auf dem Boden zwischen dem terrestrischen Netz und der Satellitenverbindung (GES, SAT, SC);
ein zweites Netzelement (AvGW) in dem Luftfahrzeug zwischen der Satellitenverbindung und dem Endgerät des Luftfahrzeugs; und
wobei zumindest eines des ersten und zweiten Netzelements Mittel (MUX, BF) zum Verschachteln von zumindest zwei Anrufen auf demselben Satellitenkanal umfasst,
**dadurch gekennzeichnet, dass**
zumindest eines des ersten und zweiten Netzelements (TeGW; MTP_GW, AvGW) zum Öffnen einer Datenübertragungsverbindung auf dem Kanal der Satellitenverbindung, wenn Information vorliegt, die übertragen werden soll, und Schließen der Datenübertragungsverbindung, wenn keine Information vorliegt, die übertragen werden soll, angeordnet ist.

2. System nach Anspruch 1, **dadurch gekennzeichnet, dass**
das System in dem Luftfahrzeug eine drahtlose Nahbereichsverbindung (WLAN, LPRF) zwischen dem zweiten Netzelement (AvGW) und dem Endgerät (MS) des Luftfahrzeugs umfasst.

3. System nach Anspruch 1, **dadurch gekennzeichnet, dass** das terrestrische Netz ein Mobilkommunikationsnetz umfasst, das eine Gateway-Mobilvermittlungsstelle (G-MSC1) umfasst, die funktionsfähig mit dem ersten Netzelement (TeGW; MTP_GW) und einem Endgerät (MS) des Mobilkommunikationsnetzes verbunden ist, und dass das Endgerät (MS) des Mobilkommunikationsnetzes Mittel zum Einrichten einer Verbindung zu dem zweiten Netzelement zum Wirken als Endgerät des Luftfahrzeugs umfasst.

4. System nach Anspruch 1, **dadurch gekennzeichnet, dass** das Mittel (MUX, BF) zum Verschachteln von Anrufen ein Multiplexer ist, der zum zeitlichen Multiplexieren (time division multiplexing) von zumindest zwei Anrufen auf demselben Kanal der Satellitenverbindung angeordnet ist.

5. System nach Anspruch 1, **dadurch gekennzeichnet, dass** die Satellitenverbindung Anrufkanäle (E1, TRAU) zum Übertragen von Anrufen und einen separaten Signalisierungskanal (E1, TRAU) zum Übertragen der Signalisierung bezüglich mehrerer Anrufe auf dem Signalisierungskanal umfasst, und dass das System Mittel (TeGW; MTP_GW, AvGW) zum Übertragen von Anrufen auf einem Sprachkanal der Satellitenverbindung und zum Übertragen der Signalisierungsdaten zu mehreren Anrufen an die mehreren Anrufe auf einem gemeinsamen Signalisierungskanal der Satellitenverbindung umfasst.

6. System nach Anspruch 5, **dadurch gekennzeichnet, dass** die Signalisierungsdaten aller der Anrufe, die über die Satellitenverbindung übertragen werden sollen, auf dem gemeinsamen Signalisierungskanal übertragen sind.

7. System nach Anspruch 3, **dadurch gekennzeichnet, dass** das erste Netzelement (TeGW) Mittel (CP2; IF4) zum Empfangen von Signalen von der Gateway-Mobilvermittlungsstelle (G-MSC1) und zum Übertragen an die Gateway-Mobilvermittlungsstelle (G-MSC1) umfasst.

8. System nach Anspruch 7, **dadurch gekennzeichnet, dass** das System eine erste Einheit (GES) umfasst, die für die Steuerung der Satellitenverbindung zuständig ist, und dass das erste und zweite Netzelement (AvGW, TeGW, MTP_GW) beide Mittel (CP2, IF3) zum Empfangen von Signalen von der ersten Einheit (GES), die für die Steuerung der Satellitenverbindung zuständig ist, und zum Übertragen an die erste Einheit (GES), die für die Steuerung der Satellitenverbindung zuständig ist, umfassen.

9. System nach Anspruch 8, **dadurch gekennzeichnet, dass** das erste Netzelement (TeGW) Mittel (CP2, IF3, IF4) zum Einleiten des Öffnens und Schließens eines Kanals der Satellitenverbindung auf Grundlage von Signalen, die von der Gateway-Mobilvermittlungsstelle (G-MSC1) empfangen sind, umfasst.

10. System nach Anspruch 8, **dadurch gekennzeichnet, dass** das zweite Netzelement (AvGW) Mittel (CP2, IF3, IF4) zum Einleiten des Öffnens und Schließens der Satellitenverbindung auf Grundlage von Signalen, die von dem Endgerät (MS) des Luftfahrzeugs über die Satellitenverbindung (GES, SAT, SC) empfangen sind, umfasst.

11. System nach Anspruch 3, **dadurch gekennzeichnet, dass** das System Mittel (AGW, IP) zum Aufrechterhalten der Datenübertragungsverbindung zwischen dem ersten Netzelement (TeGW) und der Gateway-Mobilvermittlungsstelle (G-MSC1) im paketvermittelten Modus umfasst.

12. System nach Anspruch 1, **dadurch gekennzeichnet, dass** das zweite Netzelement (AvGW) Mittel (CP1, IF3) zum Empfangen von Signalen von dem Endgerät (MS) des Luftfahrzeugs und zum Übertragen an das Endgerät (MS) umfasst.

13. System nach Anspruch 12, **dadurch gekennzeichnet, dass** das System in dem Luftfahrzeug eine zweite Einheit (SC) umfasst, die für die Steuerung der Satellitenverbindung zuständig ist, und dass das zweite Netzelement (AvGW) Mittel (CP1, IF4) zum Empfangen von Signalen von der zweiten Einheit (SC), die für die Steuerung der Satellitenverbindung zuständig ist, und zum Übertragen an die zweite Einheit (SC), die für die Steuerung der Satellitenverbindung zuständig ist, umfasst.

14. System nach Anspruch 12, **dadurch gekennzeichnet, dass** das zweite Netzelement (AvGW) Mittel (CP1, IF1, IF2) zum Einleiten des Öffnens und Schließens der Satellitenverbindung auf Grundlage von Signalen, die von dem Endgerät (MS) des Luftfahrzeugs empfangen sind, umfasst.

15. System nach Anspruch 1, **dadurch gekennzeichnet, dass** das System mehrere Luftfahrzeuge und auf dem Boden einen Server (MTS) umfasst, der mit dem ersten Netzelement (TeGW) zum Steuern der Verbindungen der Luftfahrzeuggruppe, die aus den mehreren Luftfahrzeugen gebildet ist, in Verbindung steht.

16. System nach Anspruch 3, **dadurch gekennzeichnet, dass** das zweite Netzelement (MTP_GW) eine Brückenfunktionalität (BF) zum Anpassen des Protokolls des Mobilkommunikationssystems an eine Satellitenverbindung umfasst.

17. System nach Anspruch 12, **dadurch gekennzeichnet, dass** das zweite Netzelement (AvGW) Mittel (O/M, DB) zum Sammeln und Speichern von Flugverwaltungsdaten umfasst.

18. System nach Anspruch 17, **dadurch gekennzeichnet, dass** das zweite Netzelement (AvGW) Mittel (O/M, DB) zum Übertragen der Flugverwaltungsdaten über eine Satellitenverbindung an eine Gateway-Mobilvermittlungsstelle (G-MSC1) umfasst.

19. System nach Anspruch 3, **dadurch gekennzeichnet, dass** das zweite Netzelement (AvGW) Mittel (CP1, MEM1) zum Identifizieren von Endgeräten eines Mobilkommunikationsnetzes, die in einem Luftfahrzeug registriert sind, und zum Übertragen der Identifikationsdaten der Endgeräte an eine Gateway-Mobilvermittlungsstelle (G-MSC1) zum Vermitteln der für ein Endgerät ankommenden Anrufe über eine Satellitenverbindung an das Endgerät, das sich in dem Luftfahrzeug befindet, umfasst.

20. System nach Anspruch 1, **dadurch gekennzeichnet, dass** Datenübertragung auf dem Kanal der Satellitenverbindung leitungsvermittelt ist und Datenübertragung zwischen dem ersten Netzelement und dem terrestrischen Netz sowie dem zweiten Netzelement und dem Endgerät paketvermittelt ist.

21. System nach Anspruch 1, **dadurch gekennzeichnet, dass** das Endgerät ein Dual-Mode-Endgerät eines Mobilkommunikationssystems ist, das neben der Nahbereichsverbindung zum Kommunizieren über eine Verbindung des Mobilkommunikationssystems geeignet ist.

22. Netzelement (AvGW) in einem Luftfahrzeug, das mit einer Satellitenverbindung zum Vermitteln eines Anrufs auf einem Kanal der Satellitenverbindung (GES, SAT, SC) in Verbindung steht, wobei das Netzelement Mittel (IF2, IF3) zum Empfangen von Information von der Satellitenverbindung und zum Übertragen an die Satellitenverbindung umfasst, und wobei das Netzelement (AvGW) Mittel (MUX) zum Verschachteln von zumindest zwei Anrufen auf demselben Kanal der Satellitenverbindung umfasst, **dadurch gekennzeichnet, dass** das Netzelement (AvGW) Mittel (CP1, IF1) zum Verbinden des Netzelements in einer funktionalen Verbindung mit einem Endgerät (MS) eines Luftfahrzeugs zum Empfangen von Signalen von dem und Übertragen an das Endgerät (MS) unter Nutzung einer drahtlosen Nahbereichsverbindung (WLAN, LPRF) zwischen dem Netzelement (AvGW) und dem Endgerät (MS) des Luftfahrzeugs umfasst, und dass das Netzelement (AvGW) zum Öffnen einer Datenübertragungsverbindung auf dem Kanal der Satellitenverbindung, wenn Information vorliegt, die übertragen werden soll, und zum Schließen der Datenübertragungsverbindung, wenn keine Information vorliegt, die übertragen werden soll, angeordnet ist.

23. Verfahren zum Vermitteln eines Anrufs an ein Endgerät in einem Luftfahrzeug über eine Satellitenverbindung, wobei das Verfahren folgendes umfasst:
Übertragen von Information bezüglich eines Anrufs zwischen einem terrestrischen Netz und der Satellitenverbindung (GES, SAT, SC) über ein erstes Netzelement (TeGW; MTP_GW), das sich auf dem Boden befindet,
Übertragen von Information bezüglich eines Anrufs zwischen der Satellitenverbindung und dem Endgerät des Luftfahrzeugs über ein zweites Netzelement (AvGW), das sich in dem Luftfahrzeug befindet,
Verschachteln (MUX) von zumindest zwei Anrufen auf demselben Kanal der Satellitenverbindung und
Ausführen des Verschachtelns durch zumindest ein Netzelement des ersten und zweiten Netzelements, wenn das zumindest eine Netzelement Information bezüglich zumindest zweier Anrufe aufweist, die zur Satellitenverbindung übertragen werden sollen,
**dadurch gekennzeichnet, dass** das Verfahren
in zumindest einem des ersten und zweiten Netzelements (TeGW; MTP_GW, AvGW) das Öffnen einer Datenübertragungsverbindung auf dem Kanal der Satellitenverbindung, wenn Information vorliegt, die übertragen werden soll, und das Schließen der Datenübertragungsverbindung, wenn keine Information vorliegt, die übertragen werden soll, umfasst.

24. Verfahren nach Anspruch 23, **dadurch gekennzeichnet, dass** zumindest zwei Anrufe auf demselben Kanal der Satellitenverbindung zeitlich multiplexiert (MUX) werden.

25. Verfahren nach Anspruch 23, **dadurch gekennzeichnet, dass** das Verfahren
das Übertragen der Anrufe an einen Anrufkanal (E1, TRAU) der Satellitenverbindung umfasst und
die Signalisierungsdaten von mehreren Anrufen an die mehreren Anrufe auf einem gemeinsamen Signalisierungskanal (E1, LAPD) der Satellitenverbindung übertragen werden.

26. Verfahren nach Anspruch 25, **dadurch gekennzeichnet, dass** mehrere Anrufkanäle bestehen und die Signalisierungsdaten aller der Anrufe, die über die Satellitenverbindung übertragen werden, auf dem gemeinsamen Signalisierungskanal (E1, LAPD) übertragen werden.

27. Verfahren nach Anspruch 23, **dadurch gekennzeichnet, dass** das Verfahren das Nutzen einer drahtlosen Nahbereichsverbindung (WLAN, LPRF) zwischen dem zweiten Netzelement (AvGW) und dem Endgerät (MS) des Luftfahrzeugs umfasst.

## Revendications

1. Système de transmission de données pour la commutation d'un appel vers un terminal dans un avion sur une liaison satellite, lequel système comprend
un terminal (MS) devant être utilisé dans un avion ;
un réseau terrestre (G-MSC1);
une liaison satellite (GES, SAT, SC) entre l'avion et le réseau terrestre,
un premier élément de réseau (TeGW ; MTP_GW) au sol entre le réseau terrestre et la liaison satellite (GES, SAT, SC) ;
un second élément de réseau (AvGW) dans l'avion entre la liaison satellite et le terminal de l'avion, et
au moins l'un desdits premier et second éléments de réseau comprend des moyens (MUX, BF) pour entrelacer au moins deux appels sur la même voie satellite,
**caractérisé en ce que**
au moins un desdits premier et second éléments de réseau (TeGW ; MTP_GW, AvGW) est conçu de manière à ouvrir une connexion de transmission de données sur ladite voie de la liaison satellite lorsque des informations doivent être transmises et à fermer ladite connexion de transmission de données lorsqu'il n'existe pas d'informations à transmettre.

2. Système selon la revendication 1, **caractérisé en ce que** ledit système comprend dans l'avion une connexion sans fil à courte portée (WLAN, LPRF) entre ledit second élément de réseau (AvGW) et le terminal (MS) de l'avion.

3. Système selon la revendication 1, **caractérisé en ce que** ledit réseau terrestre comprend un réseau de communication mobile, qui comprend un centre de commutation mobile passerelle (G-MSC1) connecté fonctionnellement audit premier élément de réseau (TeGW ; MTP_GW) et un terminal (MS) du réseau de communications mobiles, et **en ce que** ledit terminal (MS) du réseau de communications mobiles comprend des moyens pour établir une connexion audit second élément de réseau ayant la fonction de terminal de l'avion.

4. Système selon la revendication 1, **caractérisé en ce que** lesdits moyens (MUX, BF) pour entrelacer des appels est un multiplexeur (MUX), qui est agencé pour multiplexer par répartition dans le temps au moins deux appels sur la même voie de la liaison satellite.

5. Système selon la revendication 1, **caractérisé en ce que** ladite liaison satellite comprend des voies d'appel (E1, TRAU) pour transférer des appels et une voie de signalisation séparée (E1, LAPD) pour transférer la signalisation concernant une pluralité d'appels sur ladite voie de signalisation, et le système comprend des moyens (TeGW ; MTP_GW, AvGW) pour transférer des appels sur une voie de conversation de la liaison satellite et pour transférer les données de signalisation sur une pluralité d'appels vers ladite pluralité d'appels sur une voie de signalisation commune de la liaison satellite.

6. Système selon la revendication 5, **caractérisé en ce que** les données de signalisation de l'ensemble des appels devant être transférées par la liaison satellite sont transférées sur ladite voie de signalisation commune.

7. Système selon la revendication 3, **caractérisé en ce que** ledit premier élément de réseau (TeGW) comprend des moyens (CP2 ; IF4) destinés à recevoir des signaux provenant du centre de commutation mobile passerelle (G-MSC1) et à les transmettre au centre de commutation mobile passerelle (G-MSC1).

8. Système selon la revendication 7, **caractérisé en ce que** le système comprend une première unité (GES) en charge du contrôle de la liaison satellite, et lesdits premier et second éléments de réseau (AvGW, TeGW, MTP-GW) comprennent à la fois des moyens (CP2, IF3) pour recevoir des signaux provenant de la première unité (GES) en charge du contrôle de la liaison satellite et pour les transmettre à la première unité (GES) en charge du contrôle de la liaison satellite.

9. Système selon la revendication 8, **caractérisé en ce que** ledit premier élément de réseau (TeGW) comprend des moyens (CP2, IF3, IF4) pour lancer l'ouverture et la fermeture d'une voie de la liaison satellite sur la base des signaux reçus en provenance du centre de commutation mobile passerelle (G-MSC1).

10. Système selon la revendication 8, **caractérisé en ce que** ledit second élément de réseau (AvGW) comprend des moyens (CP2, IF3, IF4) pour lancer l'ouverture et la fermeture de la liaison satellite sur la base des signaux reçus depuis le terminal (MS) de l'avion à travers la liaison satellite (GES, SAT, SC).

11. Système selon la revendication 3, **caractérisé en ce que** le système comprend des moyens (AGW, IP) pour maintenir la connexion de transmission de données entre ledit premier élément de réseau (TeGW) et le centre de commutation mobile passerelle (G-MSC1) dans le mode de commutation de paquets.

12. Système selon la revendication 1, **caractérisé en ce que** ledit second élément de réseau (AvGW) comprend des moyens (CP1, IF3) pour recevoir des signaux du terminal (MS) de l'avion et pour les transmettre audit terminal (MS).

13. Système selon la revendication 12, **caractérisé en ce que** le système comprend dans l'avion une seconde unité (SC) en charge du contrôle de la liaison satellite, et ledit second élément de réseau (AvGW) comprend des moyens (CP1, IF4) pour recevoir des signaux de la seconde unité (SC) en charge du contrôle de la liaison satellite et pour les transmettre à la seconde unité (SC) en charge du contrôle de la liaison satellite.

14. Système selon la revendication 12, **caractérisé en ce que** ledit second élément de réseau (AvGW) comprend des moyens (CP1, IF1, IF2) pour lancer l'ouverture et la fermeture de la liaison satellite sur la base des signaux reçus depuis le terminal (MS) de l'avion.

15. Système selon la revendication 1, **caractérisé en ce que** le système comprend une pluralité d'avions et au sol, un serveur (MTS) qui est en connexion avec ledit premier élément de réseau (TeGW) pour contrôler les connexions du groupe d'avions formé de la pluralité d'avions.

16. Système selon la revendication 3, **caractérisé en ce que** ledit second élément de réseau (MPT_GW) comprend une fonctionnalité de pont (BF) pour adapter le protocole du système de communication mobile pour une liaison satellite.

17. Système selon la revendication 12, **caractérisé en ce que** ledit second élément de réseau (AvGW) comprend des moyens (O/M, DB) pour collecter et mémoriser des données de gestion en vol.

18. Système selon la revendication 17, **caractérisé en ce que** ledit second élément de réseau (AvGW) comprend des moyens (O/M, DB) pour transmettre les données de gestion en vol par le biais d'une liaison satellite à un centre de commutation mobile passerelle (G-MSC1).

19. Système selon la revendication 3, **caractérisé en ce que** ledit second élément de réseau (AvGW) comprend des moyens (CP1, MEM1) pour identifier les terminaux d'un réseau de communication mobile homologués dans un avion et pour transmettre les données d'identification des terminaux à un centre de commutation mobile passerelle (G-MSC1) pour commuter les appels entrants destinés à un terminal par le biais d'une liaison satellite vers le terminal situé dans l'avion.

20. Système selon la revendication 1, **caractérisé en ce que** la transmission de données sur la voie de la liaison satellite est commutée par circuits, et la transmission de données entre le premier élément de réseau et le réseau terrestre, ainsi qu'entre le second élément de réseau et le terminal est commutée par paquets.

21. Système selon la revendication 1, **caractérisé en ce que** ledit terminal est un terminal bimode d'un système de communication mobile, qui, outre ladite connexion à courte portée est adapté pour communiquer sur une connexion du système de communication mobile.

22. Elément de réseau (AvGW) dans un avion qui est en connexion avec une liaison satellite pour commuter un appel sur une voie de la liaison satellite (GES, STAT, SC), lequel élément de réseau comprend des moyens (IF2, IF3) pour recevoir des informations depuis la liaison satellite et pour les transmettre à la liaison satellite, et ledit élément de réseau (AvGW) comprend des moyens (MUX) pour entrelacer au moins deux appels sur la même voie de la liaison satellite, **caractérisé en ce que** ledit élément de réseau (AvGW) comprend des moyens (CP1, IF1) pour connecter l'élément de réseau dans une connexion fonctionnelle à un terminal (MS) d'un avion pour recevoir des signaux depuis le terminal (MS) et les transmettre à celui-ci en utilisant une connexion sans fil à courte portée (WLAN, LPRF) entre l'élément de réseau (AvGW) et le terminal (MS) de l'avion, et **en ce que** ledit élément de réseau (AvGW) est conçu pour ouvrir une connexion de transmission de données sur ladite voie de la liaison satellite lorsqu'il existe des informations à transmettre et pour fermer ladite connexion de transmission de données lorsqu'il n'existe pas d'informations à transmettre.

23. Procédé pour commuter un appel vers un terminal dans un avion sur une liaison satellite, le procédé comprenant :
la transmission des informations concernant un appel entre un réseau terrestre et la liaison satellite (GES, SAT, SC) par le biais d'un premier élément de réseau (TeGW ; MTP_GW) situé au sol,
la transmission des informations concernant un appel entre la liaison satellite et le terminal de l'avion par le biais d'un second élément de réseau (AvGW) situé dans l'avion,
l'entrelacement (MUX) d'au moins deux appels sur la même voie de la liaison satellite, et
la réalisation dudit entrelacement grâce à au moins un élément de réseau desdits premier et second éléments de réseau lorsque ledit au moins un élément de réseau possède des informations concernant au moins deux appels devant être transmises vers la liaison satellite, **caractérisé en ce que** le procédé comprend
l'ouverture dans au moins l'une desdits premier et second éléments (TeGW ; MTP_GW, AvGW) d'une connexion de transmission de données sur ladite voie de la liaison satellite lorsqu'il existe des informations devant être transmises et à fermer ladite connexion de transmission de données lorsqu'il n'existe pas d'informations à transmettre.

24. Procédé selon la revendication 23, **caractérisé en ce qu'**au moins deux appels sont multiplexés par répartition dans le temps (MUX) sur la même voie de la liaison satellite.

25. Procédé selon la revendication 23, **caractérisé en ce que** le procédé comprend
le transfert des appels sur une voie d'appels (E1, TRAU) de la liaison satellite et
le transfert des données de signalisation d'une pluralité d'appels vers ladite pluralité d'appels sur une voie de signalisation commune (E1, LAPD) de la liaison satellite.

26. Procédé selon la revendication 25, **caractérisé en ce qu'**il existe une pluralité de voies d'appel et les données de signalisation de l'ensemble des appels transférées sur la liaison satellite sont transférées sur ladite voie de signalisation commune (E1, LAPD).

27. Procédé selon la revendication 23, **caractérisé en ce que** le procédé consiste à utiliser une connexion sans fil à courte portée (WLAN, LPRF) entre le second élément de réseau (AvGW) et le terminal (MS) de l'avion.
